# EUROPEAN PATENT SPECIFICATION

(11) **EP 1 941 760 B1**
(45) Date of publication and mention of the grant of the patent: **28.09.2016**
(21) Application number: 06826933.1
(22) Date of filing: 26.10.2006
(51) Int. Cl.: H04W 72/04, H04W 16/28

(54) **COMMUNICATION SIGNALING USING MULTIPLE FREQUENCY BANDS IN A WIRELESS NETWORK**
KOMMUNIKATIONSSIGNALGEBUNG UNTER VERWENDUNG MEHRERER FREQUENZBÄNDER IN EINEM DRAHTLOSEN NETZWERK
SIGNALISATION DE COMMUNICATION AU MOYEN DE PLUSIEURS BANDES DE FREQUENCE DANS UN RESEAU SANS FIL

(30) Priority: 26.10.2005 US 730575 P; 31.03.2006 US 394572
(43) Date of publication of application: 09.07.2008
(73) Proprietor: Intel Corporation, Santa Clara, CA 95054 (US)
(72) Inventor: SADRI, Ali, San Diego, California 92128 (US); MALTSEV, Alexander, Nizhny Novgorod, 603163 (RU); MASLENNIKOV, Roman, Nizhny Novgorod, 603024 (RU); KHORYAEV, Alexey, Dzerzhinsk, 606016 (RU); SERGEYEV, Vadim, Nizhny Novgorod, 603105 (RU)
(74) Representative: Hutchinson, Glenn Stanley
(86) International application number: PCT/US2006/042103
(87) International publication number: WO 2007/050949

(56) References cited:
- EP-A- 1 056 304
- WO-A-95/09490
- WO-A-96/07108
- WO-A-2004/054153
- WO-A2-99/22531
- GB-A- 2 317 786
- GB-A- 2 363 256
- US-A1- 2005 070 331
- US-B1- 6 240 290

## Description

### Technical Field

Embodiments of the present invention relate to the field of data communication, more specifically, to data communication in a wireless network.

### Background

In the current state of wireless communication, an increasingly number of communication devices are able to wirelessly communicate with each other. These communication devices include a variety of devices having many different form factors varying from personal computers, mobile or desktop, displays, storage devices, handheld devices, telephones, and so forth. A number of these communication devices are packaged as "purpose" devices, such as set-top boxes, personal digital assistants (PDAs), web tablets, pagers, text messengers, game devices, smart appliances, and wireless mobile phones. Such devices may communicate with each other in various different wireless environments such as wireless wide area networks (WWANs), wireless metropolitan area networks (WMANs), wireless local area networks (WLANs), and wireless personal area networks (WPANs), Global System for Mobile Communications (GSM) networks, code division multiple access (CDMA), and so forth.

The growing demand for high throughput applications such as video streaming, real-time collaboration, video content download, and the like, imposes stringent requirements on wireless communications to provide better, faster, and lower cost communications systems. In recent years, unlicensed frequency bands such as 2.4 GHz (Industrial, Scientific, Medical (ISM)) and 5.0 GHz (Universal National Information Infrastructure (UNII)) bands have been utilized for communications up to few hundred Mbps. To .achieve these bit rates, relatively complex modulation techniques such as multiple-input/multiple-output (MIMO) orthogonal frequency division multiplexing (OFDM) have been proposed to the Institute of Electrical and Electronics Engineers (IEEE). Due to the popularity of the ISM and UNII bands, these bands are becoming crowded resulting in substantial interference for users of these bands.
US 2005/070331 refers to a transmitter using multiple antenna elements (i.e. an adaptive array antenna) for transmitting signals to one or more users in a prescribed geographical area. The transmitter has a first signal generator with an associated weighting controller and second signal generators with associated weighting controllers. Broadcast transmissions for all user terminals are transmitted using the first signal generator and for individual user terminals using a respective one of the second signal generators WO 99/22531 refers to transmission of information in a frequency channel of a first TDMA high frequency carrier and organisational information transmitted in a frequency channel of a second TDMA high frequency carrier in which the frequency channel of the first high frequency carrier has a larger bandwidth than the frequency channel of the second high frequency carrier

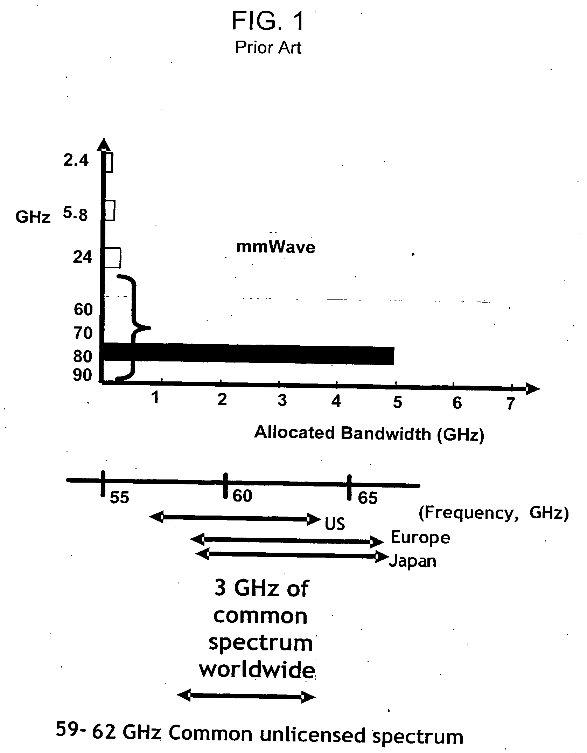

To provide an interference limited Gbps communications, IEEE committees have recently begun looking at communications at higher frequencies such as frequency bands greater than 20 GHz. **FIG. 1** shows the currently available unlicensed frequency bands in selected major industrialized countries/regions.
According to a first aspect of the invention, there is provided a method for data communication as claimed in claim 1.
According to a second aspect of the invention, there is provided an apparatus for data communication as claimed in claim 10.
Further embodiments of the invention are included in the dependent claims.

### Brief Description of the Drawings

Embodiments of the present invention will be readily understood by the following detailed description in conjunction with the accompanying drawings. To facilitate this description, like reference numerals designate like structural elements. Embodiments of the invention are illustrated by way of example and not by way of limitation in the figures of the accompanying drawings.
**FIG. 1** illustrates currently available unlicensed frequency bands in selected major industrialized countries/regions;
**FIG. 2** illustrates exemplary beamwidths of different frequency bands using antennae with about the same aperture size;
**FIG. 3** illustrates a wireless network in accordance with various embodiments of the present invention;
**FIG. 4** illustrates various types of CSMAICA protocol data that may be transmitted and/or received using a first and a second frequency bands in accordance with various embodiments of the invention;
**FIG. 5** illustrates a process for communicating by a communication device in a wireless network in accordance with various embodiments of the present invention;
**FIG. 6** illustrates a communication device in accordance with various embodiments of the present invention;
**FIG. 7** illustrates a circuitry for transmitting and receiving signals using two frequency bands in accordance with various embodiments of the present invention;
**FIG. 8** illustrates a frame format in accordance with various embodiments of the present invention;
**FIG. 9** illustrates another frame format in accordance with various embodiments of the present invention;
**FIG. 10** illustrates yet another frame format in accordance with various embodiments of the present invention;
**FIG. 11** illustrates two frame formats using two frequency bands of a soft coupled system adapted to communicate using the two frequency bands in accordance with various embodiments of the present invention; and coupled system adapted to communicate using the two frequency bands in accordance with various embodiments of the present invention; and
FIG. 12 illustrates a circuitry of a soft coupled system adapted to communicate using two frequency bands in accordance with various embodiments of the present invention.

### DETAILED DESCRIPTION OF ILLUSTRATIVE EMBODIMENTS OF THE INVENTION

In the following detailed description, reference is made to the accompanying drawings which form a part hereof wherein like numerals designate like parts throughout, and in which is shown by way of illustration embodiments in which the invention may be practiced. It is to be understood that other embodiments may be utilized and structural or logical changes may be made without departing from the scope of the present invention. Therefore, the following detailed description is not to be taken in a limiting sense, and the scope of embodiments in accordance with the present invention is defined by the appended claims.

Various operations may be described as multiple discrete operations in turn, in a manner that may be helpful in understanding embodiments of the present invention; however, the order of description should not be construed to imply that these operations are order dependent.

The description may use phrases such as "in one embodiment," or "in various embodiments," which may each refer to one or more of the same or different embodiments. Furthermore, the terms "comprising," "including," "having," and the like, as used with respect to embodiments of the present invention, are synonymous.

According to various embodiments of the invention, methods and systems are provided in which a communication device communicates with other communication devices in a wireless network using a first and a second frequency band. For the embodiments, the first frequency band is associated with a first beamwidth while the second frequency band is associated with a second beamwidth, the first beamwidth being greater than the second beamwidth. Although the following description describes using two frequency bands, in alternative embodiments, more than two frequency bands may be employed.

In various embodiments, the first frequency band is employed to communicate (i.e., transmit and/or receive) first signals to facilitate initial communication between the communication device and the other communication devices of the wireless network, including initial communication of first signals containing signals and/or control information for coarse configuration of the other communication devices to wirelessly communicate with the communication device. The subsequent communication of second signals between the devices is transmitted using the second frequency band. The second signals further include signals and/or control information for finer configuration of the other communication devices to wirelessly communicate with the communication device.

In some embodiments, the first signals may be adapted for signal detection, initial beam forming, and/or initial carrier frequency offset (CFO) estimation, to facilitate subsequent communication using the second frequency band. The second signals communicated through the second frequency band may be adapted for more precise beam forming that supplements the initial beam forming and/or signals that are adapted for fine CFO estimation that may supplement the initial CFO estimation. The second signals may further facilitate timing synchronization of the other communication devices to the communication device. The second signals communicated using the second frequency band, as previously alluded to, facilitate further communication using the second frequency band in order to facilitate the communication of third signals using the second frequency band. The third signals to be communicated using the second frequency band carry data, and may include various types of data including, for example, data relating to video streaming, realtime and/or non-realtime collaboration, video content download, audio and text content download and/or upload, and so forth.

Various approaches may be used in various alternative embodiments in order to communicate via the first frequency band associated with the first beamwidth (herein "first frequency band") and the second frequency band associated with the second beamwidth (herein "second frequency band"). For example, in some embodiments, communication using the first frequency band may be as a result of using a relatively low frequency band such as those bands less than about 20 GHz while communication using the second frequency band may be as a result of using a higher frequency band such as those bands centered above about 20 GHz. Various antenna systems that may include various combinations of antennas and/or multi-element antennas may be employed in various alternative embodiments in order to communicate using the first and the second frequency bands.

The first frequency band may be a lower frequency band than the second frequency band. For these embodiments, the first frequency band may be the 2.4 GHz ISM band or the 5.0 GHz UNII band, or some other band less than about 20 GHz while the second frequency band may be a higher frequency band such as a band greater than about 20 GHz, including for example, the 24 GHz band or a band centered in the 59 to 62 GHz spectra. Note that for purposes of this description, the process of communicating using the first lower frequency band may be referred to as out-of-band (OOB) communications and the process of communicating using the second higher frequency band may be referred to as in-band communications. Note further that other frequency bands may also be used as the first and second frequency bands in alternative embodiments and that the demarcation between the first lower frequency band and the second higher frequency band may not be at 20 GHz. In still other alternative embodiments, the first and the second frequency bands may be centered at the same frequencies but may be associated with different beamwidths by using, for example, antennas of different aperture sizes.

The first frequency band may be used by the communication device to communicate with the other communication devices of the wireless network, OOB control information signals or simply "first control signals" to facilitate data communication using the second frequency band. The first control signals may comprise of "signals" and/or "control information" to facilitate initial or coarse beamforming, CFO estimation, timing synchronization, and so forth, of the device or the other communication devices. In some embodiments, the communication device may use the second frequency band to transmit and/or receive to and/or from the other communication devices of the wireless network, in-band control information signals or simply "second control signals" to further facilitate data communication using the second frequency band. The second control signals may be comprised of signals and control information to facilitate fine beamforming, CFO estimation, timing synchronization, and so forth, of the communication device or the other communication devices. The subsequent data or data signals to be communicated (i.e., transmitted and/or received) using the second frequency band may include signals for tracking of the beamforming, CFO, timing, and so forth, as well as various types of data including, for example, data relating to video streaming, realtime and/or non-realtime collaboration, video content download, audio and text content download and/or upload, and so forth.

In order to appreciate various aspects of embodiments of the invention, the characteristics of a frequency band associated with a relative broad beamwidth and the characteristics of a frequency band associated with a relatively narrow beamwidth will now be discussed. This discussion will also describe the characteristics of various types of antennas including, for example, omnidirectional and directional antennas. In addition, a discussion relating to the impact of using a lower as opposed to a higher frequency band will also be provided.

This discussion begins with a brief description of beamwidths. A beamwidth is a spatial characteristic typically associated with antennas or dishes. The beamwidth of an antenna may be determined by the ratio of the antenna aperture size to the wavelength of the signals to be transmitted (or received). That is, the greater the aperture size, the narrower the beamwidth if the wavelengths of the signals to be transmitted (or received) are held constant. Alternatively, the beamwidth may also be made narrower by transmitting (or receiving) signals of shorter wavelengths (i.e., higher frequency) while maintaining a constant aperture size. Thus when an antenna or antennas having similar sized apertures transmit signals of different frequency bands, different beamwidths may result. Note that although the above discussion relates to, among other things, the relationship between aperture size and beamwidth, multi-element antennas may be employed to selectively control the beamwidth of the signals to be transmitted, in which case aperture size may not be relevant as to beamwidth of the signals to be transmitted. That is, antenna systems may be employed that have multi-element antennas that may be adaptively configured to selectively transmit (or receive) signals associated with different beamwidths.

Thus, in order to obtain a relatively broad beamwidth, one approach is to use an antenna having a small aperture, such as an omnidirectional antenna, instead of or in addition to using a relatively low frequency band (e.g., ISM or UNII bands). In contrast, in order to obtain a narrower beamwidth, one approach is to use an antenna having a large aperture, such as a directional antenna, instead of or in addition to using a relatively high frequency band. Of course, alternatively, a single antenna may provide varying beamwidths simply by varying the frequency bands (i.e., either higher or lower frequency bands) of the signals to be transmitted and/or received. In still other alternative approaches, and as previously alluded to, multi-element antennas may be employed to provide frequency bands with varying beamwidths. That is, a single set of multi-element antennas may be adaptively controlled using, for example, special procedures or protocols to provide specific beam directions and specific beam shapes. Thus, a single set of multi-element antennas may be employed to provide multiple frequency bands of varying beamwidths. Note that in the following description, the phrase "antenna" may refer to a single antenna or multi-element antennas.

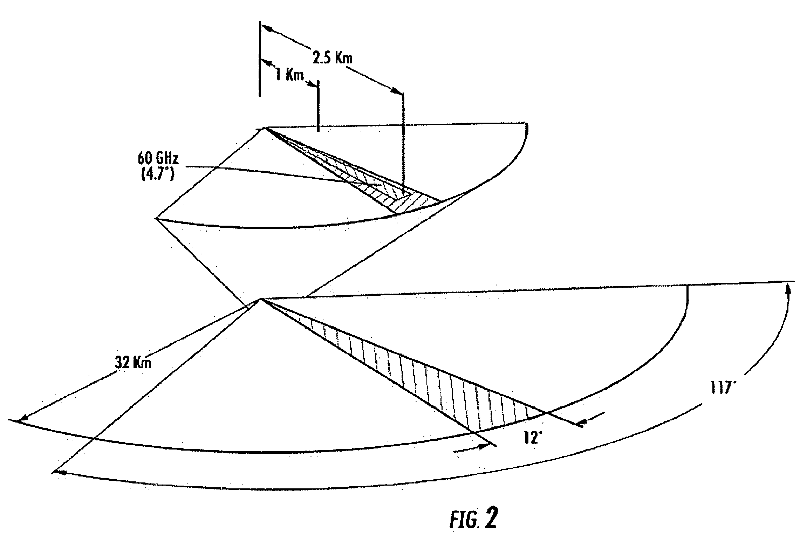

Referring now to **FIG. 2** comparing the beamwidths of various frequency bands using antennas with about the same aperture size. As previously alluded to, one of the properties of using a lower frequency band such as the 2.4 GHz (ISM) band or the 5.0 GHz (UNII) band instead of a higher frequency band such as an in-band frequency band (e.g., bands greater than 20 GHz) for communicating in a, for example, wireless network is that the lower frequency bands may be associated with a greater beamwidth. Because of the greater beamwidth, signals transmitted via the lower frequency bands will likely reach more devices in the wireless network. However, because of the greater beamwidth, the drawback in using a lower frequency band is that because of the broader wedge, there is a greater risk of interference and interception.

In contrast to the lower frequency bands, when higher frequency bands are used for communicating in a wireless network a narrower beamwidth may result as previously described. As a result, there may be less likelihood of interference. In addition to the narrower beamwidth, another property of a higher frequency band is that if a higher frequency band (such as the 24 or the 60 GHz band) is used then there may be an additional attenuation with distance due to, for example, oxygen absorption. That is, and as depicted in **FIG. 2****,** a higher frequency band (e.g., 60 GHz band) may have a smaller beamwidth and a shorter "range" or "reach" than a lower frequency band (e.g., 2.4 or 5.0 GHz bands). Thus, devices operating in the 60 GHz band instead of a lower band such as the 2.4 or 5.0 GHz bands may typically have less interference risk from other remote devices.

Another characteristic of using a higher frequency band for communicating in a wireless network is that the higher frequency band may allow higher signal bandwidth to be used (as more spectra is typically available at higher frequencies) which may consequently allow greater data throughput. At the same time, using the larger bandwidth may decrease the power spectral density of the transmit signal and potentially decrease the reliable communication range due to less signal-to-noise ratio at the receiver side.

The use of higher frequency bands for communicating in a wireless network may mean that a directional antenna rather than an omnidirectional antenna may be used for such communication. The use of such an antenna by itself may offer certain advantages and disadvantages when used to communicate in a wireless network. For example, one advantage of using a directional antenna and the higher frequency band for transmitting signals is that less power may be needed in comparison to using an omnidirectional antenna to achieve the same level of received power. Thus, less efficient (and less expensive) radio frequency (RF) components may be used with the directional antenna, which may be a significant factor in some situations as costs of RF parts may be significantly higher for higher frequency communication.

Of course, there may be certain drawbacks when communicating in a wireless network using a higher frequency band with a directional antenna. For example, adapted or multiple fixed antenna setting that spans 360 degrees may be needed in order to register all of the communication devices in the network. This may be very time-consuming and synchronizing the communication device in the network using, for example, protocols such as carrier sense multiple access and collision avoidance (CSMA/CA) or carrier sense multiple access and collision detection (CSMA/CD) may be very difficult and may not be feasible when a higher frequency band using a directional antenna is employed.

In accordance with various embodiments, the characteristics of frequency bands associated with different beamwidths as described above may be combined and used in a wireless communication network in accordance with various embodiments of the invention as described below.

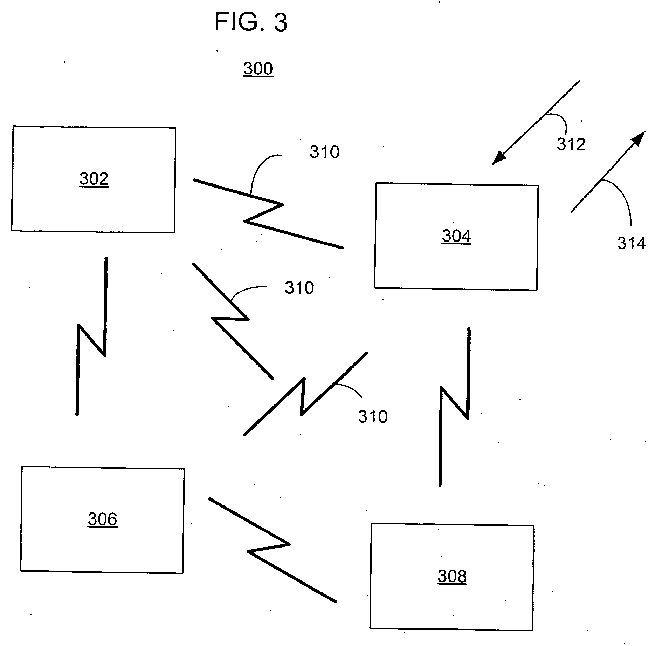

**FIG. 3** illustrates a wireless network that includes multiple communication devices (CDs) that are in communication with each other via multiple communication links in accordance with various embodiments. For the embodiments, the network **300** may be WWAN, WMAN, WLAN, WPAN, or other types of wireless networks. The communication devices (CDs) **302-308** may be desktop computers, laptop computers, set-top boxes, personal digital assistants (PDAs), web tablets, pagers, text messengers, game devices, smart appliances, wireless mobile phones or any other types of computing or communication devices. In some embodiments, at least one of the CDs **302-308** may be a master or an access point, while the other CDs may be the client or slave devices. Note that in alternative embodiments, the network **300** may include more or fewer CDs. Each of the CDs **302-308** may communicate with the other CDs of the network **300** via links **310** that may be bidirectional. Communication between the CDs may be in accordance with standards such as 802.11a, 802.11b, and other derivatives of these standards.

For ease of understanding, embodiments of the present invention will be further described assuming that the network **300** is a WPAN and that CD 302 is the access point and that the other CDs **304-308** are the client devices. Note that in alternative embodiments, the network **300** may not include an access point. For example, the network **300** may be an ad-hoc mesh network in alternative embodiments, in which case, the access point is not needed. Returning to **FIG. 3****,** in some embodiments, at least some of the client CDs **304-308** may arbitrarily and randomly join and/or leave the network **300.** Each time a client CD **304-308** enters the network **300,** it may authenticate or associate (herein "associate") with the network **300** so that the various client CDs of the network **300** may "know" that the client CD is present in the network **300.** In some embodiments, a client CD **304-308** may associate with the network **300** by associating with the access point CD 302. Note that in this illustration, client CD **304** has just entered the network **300** as indicated by reference **312.**

The CD **304** upon entering the network **300** may associate itself with the network (e.g., via access point CD **302**). In accordance with various embodiments, association with the network **300** may be accomplished using, for example, a first frequency band associated with a relatively broad beamwidth. By transmitting the association signals using a frequency band associated with a relatively broad beamwidth (herein "first beamwidth"), the other CDs **302, 306,** and **308** in the network **300** may be more likely to receive the authentication signals (e.g., beacons) from CD **304.** In some embodiments, the first frequency band may be a 2.4 GHz (ISM), a 5.0 GHz (UNII), or other bands that may be less than, for example, 20 GHz. Note that the access point CD **302** may listen for (i.e., authentication or association) an entering CD **304** through signals transmitted in the first frequency band. After successfully registering or associating with the network **300** (which may be effectuated via any one of a number of association and/or authentication protocols), the components of CD **304** may then "sleep" until it receives data transmission from one of the other CDs in the network or is ready to transmit data to the network **300** (i.e., to one or more of the other CDs in the network **300**).

When the client CD **304** is ready to transmit signals to one or more of the other CDs **302, 306,** and **308** in the network **300** (including the access point CD **302**), it may initially transmit first control signals that include control information using again the first frequency band associated with the first beamwidth. In using the first frequency band associated with the first beamwidth, the other CDs **302, 306,** and **308** in the network **300** are more likely to "hear" or receive the signals transmitted by the client CD **304.** This may provide the opportunity to reduce the interference in the second frequency band because the devices are now aware of intentions of the CD **304** and may therefore defer their transmission for the appropriate time period. In various embodiments, the other CDs **302, 306,** and **308** may determine the signal parameters of the first control signals transmitted by the client CD **304.** By measuring the signal parameters, the other CDs **302, 306,** and **308** may determine the signal strength and the angle of arrival of the first control signals. As a result, the other CDs **302, 306,** and **308** may be facilitated in determining the distance between the other CDs **302, 306,** and **308,** and the client CD **304.**

Further, the location, at least in part of CD **304** relative to the other CDs (e.g., in terms of azimuth and elevation) may be determined by the other CDs **302, 306,** and **308** based at least in part on the angle of arrival of the initial signals using the first frequency band. These determinations, in effect, may facilitate further communication using a second frequency band associated with a relatively narrow beamwidth. That is, the antenna systems employed by the other CDs **302, 306,** and **308** may be properly configured and/or aligned based on the determinations to facilitate further communication using the second frequency band between the CDs **302, 306,** and **308,** and the client CD **304.**

The first control signals transmitted through the first frequency band may facilitate initial communication between the CD **304** and the other CDs **302, 306,** and **308** of the network **300;** including signals and/or control information for coarse configuration by the other CDs **302, 306,** and **308** to communicate with CD **304.** The devices subsequently communicate using a second frequency band that is associated with a second beamwidth that may be a narrower beamwidth than the first beamwidth of the first frequency band. In some embodiments, the first control signals may include signals for medium access control (MAC) mechanism data such as data associated with CSMA/CA or CSMA/CD. Again, by using the first frequency band associated with the relatively broad beamwidth for communicating data, such as MAC mechanism data, each of the other CDs **302, 306,** and **308** are more likely to receive the MAC mechanism data. The first control signals may further include signals as well as control information for initial beam forming parameters such as beam forming coefficients, synchronization parameters, initial CFO estimation, detection, and so forth. In particular, in some embodiments, the first control signals may be adapted to facilitate beam forming, CFO estimation, and/or synchronization of the other CDs **302, 306,** and **308.**

In some embodiments, where one or more of the CDs **302-304** employ antenna systems that include multi-element antennas, the first control signals transmitted using the first frequency band may include signals that facilitate different diversity techniques (e.g., antenna selection and maximum ratio combining), space-time codes (e.g., Alamouti code), and MIMO techniques.

The second frequency band may be a higher frequency band than the first frequency band. For example, the second frequency band may be an in-band band (i.e., greater than 20 GHz) such as the 24 GHz band or a frequency band in the 59-62 GHz spectra. The higher frequency bands, such as those greater than 20 GHz, may provide greater bandwidth than lower frequency bands (e.g., 2.4 GHz and 5.0 GHz). In various embodiments, communication using the second frequency band may be in accordance with a particular technique such as OFDM or other modulation techniques. Note that in some alternative embodiments, the first and the second frequency bands may be substantially the same frequency bands but may be associated with different beamwidth by using, for example, antennas of different aperture sizes or using an antenna system that employs multi-element antennas. Further note that if CD **304** is unable to communicate using the second frequency band, then CD **304** may operate in a fall-back operation mode in which communication is entirely via first frequency band at least until the second frequency band is made available. Such a fall-back mode may be needed, for instance, if the transmitting and receiving devices cannot "see" each other using the second frequency band.

After the first control signal has been transmitted using the first frequency band to facilitate communication, second control signals may be transmitted using the second frequency band to further establish communication. The second control signals may include signals and/or control information to facilitate fine beam forming, fine CFO estimation, synchronization, and so forth, by the other CDs **302, 306,** and **308.** Once further communication using the second frequency band has been established, signals for tracking of beam forming, CFO, timing, and so forth, as well as signals that include data such as video streaming, real-time collaboration, video content download, and the like may be communicated using the second frequency band.

When client CD **304** is to leave the network **300** as indicated by reference **314,** the client CD **304** may exchange various exit information or parameters with the network **300** (e.g., access point CD 302) prior to exiting the network **300.** Upon exiting the network **300,** CD **304** may transmit exit information through the first frequency band. The exit information may include the reason code such as bad signal quality, or just does not want to communicate any more (the application has closed), or was not authorized to enter the network, and so forth.

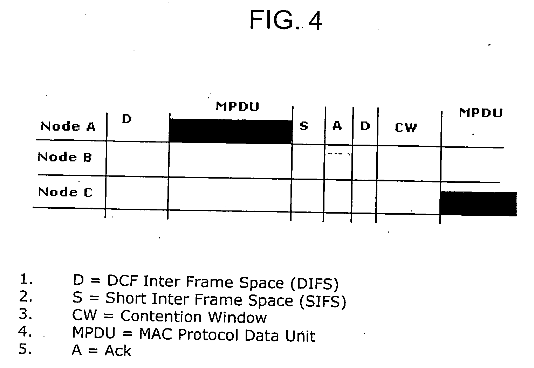

**FIG. 4** illustrates some types of CSMA/CA data that may be communicated via a first and a second frequency band in a wireless network in accordance with various embodiments. In particular, **FIG. 4** shows three nodes A, B, and C communicating with each other in accordance with the CSMA/CA protocol. The first frequency band is associated with a first beamwidth and the second frequency band is associated with a second beamwidth, and the first beamwidth is wider or larger than the second beamwidth. For the embodiments, the Distributed Coordination Function (DCF) Inter Frame Space (DIFS), the Short Inter Frame Space (SIFS), and the Contention Window (CW) may be facilitated using the first and the second frequency band, while the MAC Protocol Data Unit (MPDU) and the Acknowledge (Ack) may be communicated using the first and/or the second frequency bands.

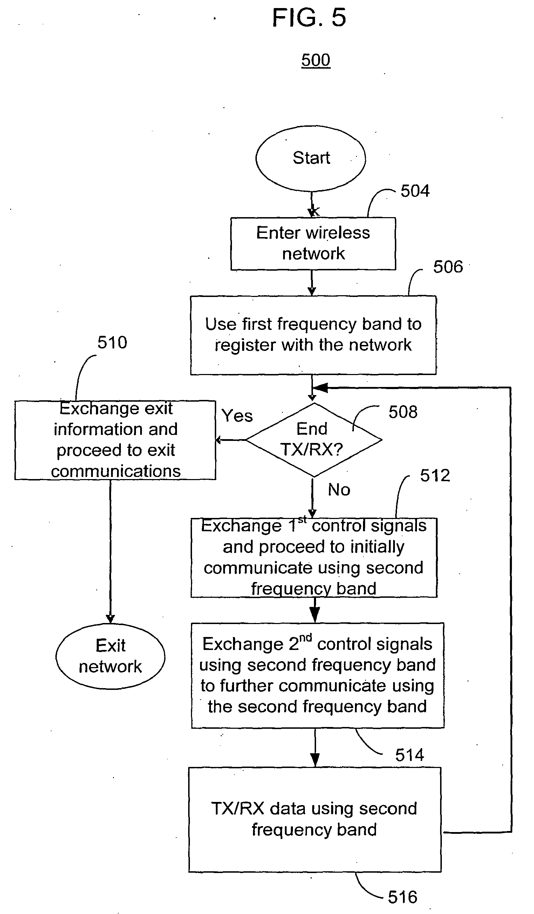

**FIG. 5** illustrates a process for communication between devices of a wireless network using a first and a second frequency band, where the first frequency band has a first beamwidth that is broader than a second beamwidth associated with the second frequency band. The process **500** may be practiced by various communication devices and may begin with a communication device entering the network at **504.** After entering the network, the communication device may use a first frequency band (e.g., 2.4 GHz ISM band or 5.0 GHz UNII band) associated with a first beamwidth to register with the network at **506.** If the communication device has finished communicating (e.g., transmitting and/or receiving) at **508** then that device may exchange exit information with the network and proceed to exit the network at **510.**

On the other hand, if the communication device is not yet finished communicating with the network (i.e., one or more communication devices of the network) at **508,** then the communication device may exchange control signals with other devices using the first frequency band, and then communicate with the other devices using a second frequency band associated with a second beamwidth at **512.** Note that the term "exchange" as used herein may be a bidirectional or a unidirectional exchange of signals. The second frequency band may then be used to communicate second control signals having signals and/or control information that facilitate further communication using the second frequency band at **514.** The second control signals may include, for example, signals and/or control information for fine beam forming, fine CFO estimation, and/or synchronization, that may supplement the first control signals that were exchanged using the first frequency band in order to further establish communication using the second frequency band. Once communication has been further established using the second frequency band, signals carrying various data may be exchanged at **516.** After the communication device has finished communicating with the devices of the network using the second frequency band, the process **500** may repeat itself by returning to **508.**

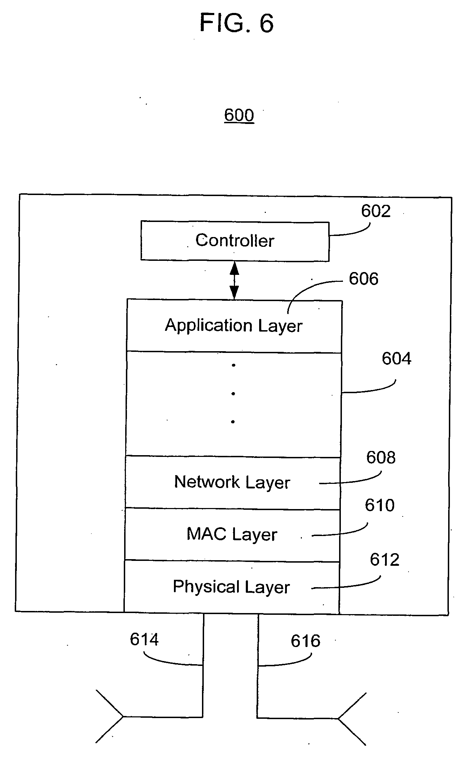

**FIG. 6** depicts portions of a communication device (CD) **600** that includes a protocol stack **604** having a number of layers including an application layer **606,** a network layer **608,** a medium access control (MAC) layer **610,** and a physical (PHY) layer **612.** The CD **600** may further include a controller **602** such as a processor or microcontroller to coordinate the activities of various components associated with the various layers of the CD **600.** The components of PHY layer **612** may be coupled to two antennae **614** and **616.** In some embodiments, one antenna **614** may be an omnidirectional antenna while the other antenna **616** may be a directional antenna. For these embodiments, the omnidirectional antenna may be adapted to transmit and/or receive signals of a first frequency band associated with a first beamwidth while the directional antenna may be adapted to transmit and/or receive signals of a second frequency band associated with a second beamwidth. Again, the first beamwidth may be greater than the second beamwidth. In some embodiments, the first frequency band may be a lower frequency band than the second frequency band. In alternative embodiments, only a single antenna may be coupled to the PHY layer **612.** In still other alternative embodiments, the PHY layer **612** may include or may be coupled to an antenna system that may employ, for example, one or more multi-element antennas to transmit and/or receive signals using the first and the second frequency bands associated with the first and the second beamwidths, respectively:

Various embodiments of the invention may be practiced by the components of the MAC and PHY layers **610** and **612** of the CD **600** (hereinafter, simply MAC and PHY layers). PHY layer **612** may be adapted to transmit and/or receive first signals (i.e., first control signals) using a first frequency band to facilitate establishment of initial communication using a second frequency band. The PRY layer 612 may be further adapted to transmit and/or receive second signals (i.e., second control signals) using the second frequency band to facilitate further communication using the second frequency band to communicate third signals carrying data. The MAC layer 610, in contrast, may be adapted to select the first or the second frequency bands to be used by the PRY layer 612 to transmit and/or receive the first, the second and/or the third signals.

The omnidirectional antenna 614 may be used to transmit and/or receive the first signals via the first frequency band to facilitate initial communication between the CD 600 and other CDs of a wireless network using the second frequency band. In contrast, the directional antenna 616 may be used to transmit and/or receive the second and third signals using the second frequency band, the communication using the directional antenna 616 at least in part being initially established via the first signal transmitted and/or received using the omnidirectional antenna 614. In order to practice the various functions described above for CD 600 as well as the functions described previously, the CD 600 may include a physical storage medium adapted to store instructions that enables the CD 600 to perform the previously described functions.

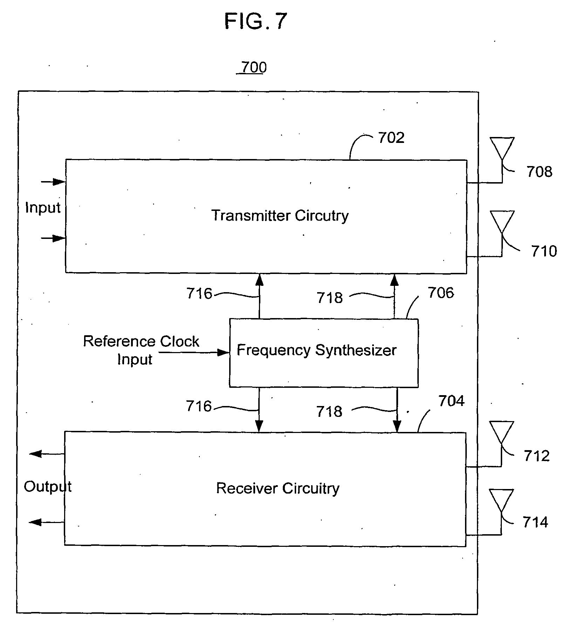

FIG. 7 illustrates a circuitry for transmitting and/or receiving signals using a first and a second frequency band in accordance with various embodiments. The circuitry 700 may operate in a wireless network environment and may include, among other things, transmitter circuitry 702, receiver circuitry 704, frequency synthesizer 706, and antennae 708-714. Note that in alternative embodiments, the circuitry 700 may employ any number of antennas. Note further that the term "antennae" and "antennas" as used herein are synonymous.

In various embodiments, the circuitry 700 may operate in an Orthogonal Frequency Multiple Access (OFMA) environment. The circuitry 700 may include zero intermediate frequency (ZIF) circuitry, super heterodyne circuitry, direct conversion circuitry, or other types of circuitry, In some embodiments, the circuitry 700 may be one of the circuitries as disclosed in co-pending application WO 2013/149189 entitled "Systems For Communicating Using Multiple Frequency Bands In A Wireless Network."

The frequency synthesizer 706, in some embodiments, may be a frequency synthesizer that provides both a first lower modulation frequency signal 716 and a second higher modulation frequency signal **718,** such as a 2.4/60 GHz frequency synthesizer, to the transmitter and receiver circuitries **702** and **704.** The first and the second modulation frequency signals **716** and **718** may be used to modulate and/or demodulate signals to be transmitted or received using the first and the second frequency bands, respectively. The transmitter circuitry **702** may be coupled to a first antenna **708** that may be an omnidirectional antenna, and a second antenna **710** that may be a directional antenna. The receiver circuitry **704** may be coupled to a third antenna **712** that may be a directional antenna, and a fourth antenna **714** that may be an omnidirectional antenna.

In various embodiments, the relative CFO for circuitry **700** may be defined by the reference oscillator stability. Thus the same oscillator may be employed for both the OOB (e.g., first frequency band) and the in-band band (e.g., second frequency band) operations. Accordingly, the absolute value of the CFO may be much higher for the in-band (second frequency band) operations.

The initial CFO estimation and compensation problem for such a system is solved using the OOB operations. For example, the frequency synthesizer **706** is designed in such a way that both the in-band frequency synthesis circuitry and OOB frequency synthesis circuitry use the same reference clock oscillator. In this case, the signals transmitted at both OOB frequency and in-band frequency may have the same relative (in ppm) CFOs. An initial estimation of the CFO at the receiving end may be done for the OOB signal, and after that, an estimate may be recalculated and used for the coarse frequency offset compensation at the in-band frequency. The entire system may also use OOB signaling for tracking of, for example, timing, carrier frequency offset and so forth.

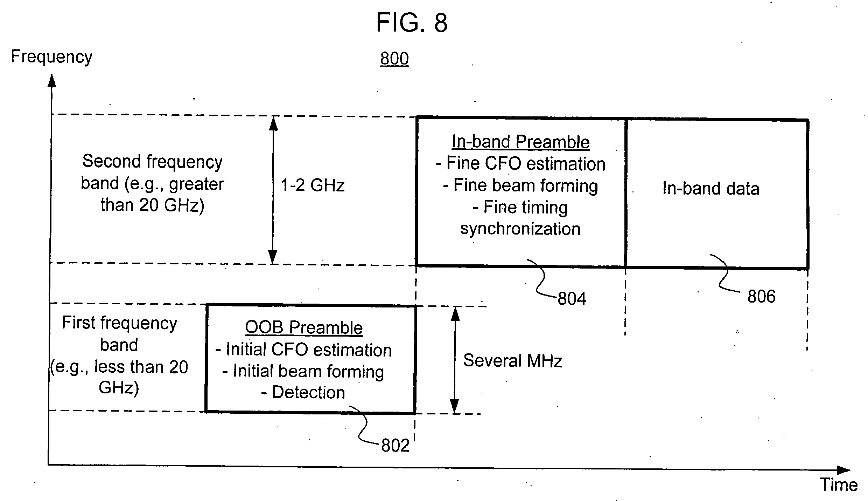

**FIG. 8** illustrates a frame format for communicating in a wireless network using a first and a second frequency band in accordance with various embodiments. Frame format **800** may represent the format of the signals to be transmitted and/or received by a communication device to and/or from another communication device of a wireless network. The first frequency band (i.e., out-of-band (OOB) frequency band) may be a lower frequency band such as a frequency band less than about 20 GHz while the second frequency band (i.e., in-band frequency band) may be a frequency band above about 20 GHz. Further note that because of the greater spectra available in the higher frequency bands, the second higher frequency band may have a bandwidth of about 1-2 GHz or more while the first lower frequency band may only have a bandwidth of several MHz.

The frame format **800** includes an OOB preamble **802** to be communicated via the first frequency band that may be embodied in signals adapted for signal detection, initial carrier frequency offset (CFO) estimation, and/or initial beam forming. Note that the term "preamble" as used herein is to be broadly interpreted and may mean any type of data packet or portion of a data packet. In some embodiments, the OOB preamble may include medium access control data such as data relating to CSMA/CA or CSMA/CD data.

The frame format **800** may further include an in-band preamble **804** and in-band data **806** to be communicated using the second frequency band. The in-band preamble **804** may be embodied in signals that are adapted for finer timing synchronization, finer CFO estimation, and/or finer beam forming. The signals for the in-band preamble **804** may supplement the control signals (e.g., initial CFO estimation, initial beam forming, and so forth) exchanged using the first frequency band. As a result, the in-band preamble **804** may further facilitate communication using the second frequency band in order to facilitate communication of the in-band data **806.** Special field symbols may be placed after the OOB preamble **802** to provide encoded service information that may be needed for consequent data symbols and in-band packet decoding (e.g., modulation and coding scheme used, and so forth).

In order to appreciate certain aspects of the signals that embody the frame format **800,** a more detailed explanation of CFO will now be provided. CFO is the difference between the carrier frequencies that the transmitter and the receiver are tuned at. Although CFO estimation may be more accurately determined when it is determined using the preamble (i.e., preamble signals) of a higher frequency band such as the in-band preamble **804,** an initial CFO estimation may be initially determined using the OOB preamble **802** (i.e., OOB preamble signals) to partially determine the CFO prior to fine estimation of the CFO using the in-band preamble **804.** As a result, by including signals for initial CFO estimation in the signals embodying the OOB preamble **802,** the task of fine CFO estimation may be simplified.

The in-band preamble **804** (i.e., in-band preamble signals) may be adapted for fine CFO estimation, which may supplement the initial CFO estimation performed using the OOB preamble **802.** The CFO is the frequency difference between the reference clock oscillator in the transmitting device and the reference clock oscillator in the receiving device. Since the reference oscillators determine the "time scales" of the transmitting device and the receiving device, the CFO may be determined by the product of the difference of the reference oscillator frequencies expressed in percent with respect to the absolute value of those frequencies, and the value of carrier frequency expressed in Hertz. CFO estimating schemes are typically more sensitive to the absolute value of the difference between the carrier frequencies of the receiver and the transmitter, noting that the greater the carrier frequency, the higher the achievable CFO values. Thus, improved accuracy may be obtained for CFO estimates when they are determined using preamble signals that are communicated using a higher frequency band such as an in-band frequency band.

The signals embodying the OOB preamble **802** may be adapted for initial beam forming. As used herein, initial beam forming refers to an initial process in beam forming calculations that may include preliminary estimation of angle of arrival of a signal wave front from a remote transmitting device. This operation may facilitate preliminary adjustments of the antenna system of the receiving device in order for the receiving device to receive the subsequent in-band preamble. This operation may also reduce the search interval for angle of arrival of the in-band signals. For example, initial beam forming may point to a sector where the remote transmitting device is operating. If the antenna of the receiving device has multiple substantially narrow sectors, then the initial beam forming may reduce the number of sectors to search for the subsequent in-band signals.

In order to supplement the initial beam forming, signals embodying the in-band preamble **804** may be adapted for fine beam forming. Fine beam forming may refer to the process of fine or precise antenna adjustment to improve the receiving quality of, for example, in-band signals (i.e., signals transmitted through second frequency band). Depending on the beam forming algorithm used, this may include choosing the optimal antenna or optimal sector within the antenna where the signal quality metrics are the best. Fine beam forming may also include calculations of complex coefficients (or only phase shift values) for combining the signals coming from different antennae or from different sectors within the sectored antenna.

The signals embodying the OOB preamble **802** may be adapted for signal detection. That is, the signals containing the OOB preamble **802** may be adapted to facilitate signal detection and to indicate to the receiving devices that the signals are "valid" signal. The signals containing the OOB preamble may be adapted to indicate to the receiving device or devices that it is a signal containing a "valid" message from a network communication device rather than just noise or interference. Currently, the Federal Communications Commission (FCC) allows greater power spectral density in the lower bands (e.g., 2.4 GHz and 5.0 GHz bands), and therefore, signal detection may be more easily performed in these lower bands because of the higher probability that "valid" signals will be properly detected when the lower bands are used.

The signals embodying the in-band preamble **804** may be adapted for fine timing synchronization. Fine timing synchronization may relate to a process that finds boundaries of informational symbols within a received signal. Since the signals of the in-band preamble **804** have greater spectrum bandwidth (relative to the OOB preamble signals), these signals may be designed to have, for example, better correlation properties than the signals embodying the OOB preamble **802.** Therefore, by including fine timing synchronization signals with the signals embodying the in-band preamble **804,** more precise timing estimation and therefore better synchronization may be obtained.

Once communication using the second frequency band has been fully established as a result of communicating the OOB preamble **802** and the in-band preamble **804,** in-band data **806** may be communicated via the second frequency band as shown in **FIG. 8****.** The in-band data **806** may include for example, video streaming, real-time collaboration, video content download, and so forth.

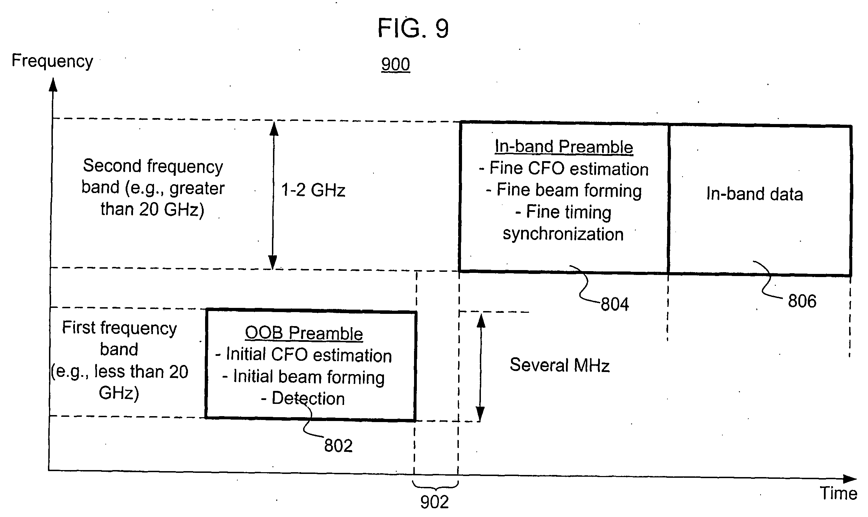

**FIG. 9** depicts frame format **900** that includes OOB preamble **802,** in-band preamble **804,** and in-band data **806,** similar to the frame format **800** of **FIG. 8****,** as shown. However, unlike the frame format **800** of **FIG. 8****,** the frame format **900** includes a time gap **902.** The time gap **902** separates the OOB preamble **802** and the higher-frequency part of the frame (e.g., in-band preamble **804**) to allow the receiver circuitry of the receiving device to switch between the first and second frequency bands and to allow the subsequent relaxation processes in the circuitries, such as filters, to finish (see, for example, **FIG**. **7**).

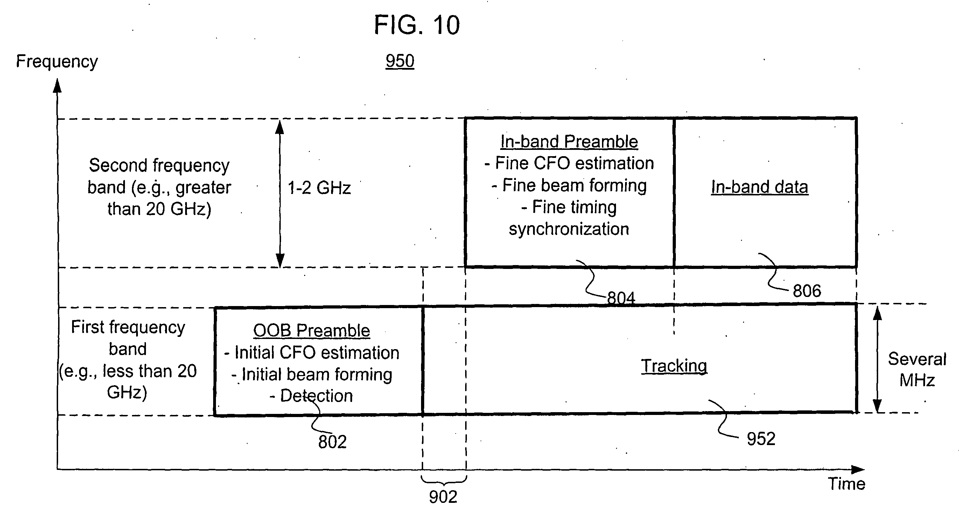

**FIG. 10** depicts still another frame format for communicating in a wireless network using a first and a second frequency band in accordance with various embodiments. The frame format **950** is similar to the frame format **900** of **FIG. 9** except that the first frequency band may be used, after the time gap **902,** for tracking and/or sending service information as indicated by reference **952.** That is, the first frequency band may be used for tracking of beamforming, CFO, timing, and so forth, and/or for sending service information such as channel access signals. Note that in alternative embodiments, the time gap **902** may not be present. Further note that the OOB part of the frame format **950** may contain signals such as pilot or training signals

The previous embodiments refer to "hard" coupled systems that communicate using a first and a second frequency band, wherein communication using the second frequency band is a result of the communication using the first frequency band. In other words, the hard coupled systems use the first frequency band to communicate signals (e.g., first control signals) to facilitate subsequent communication using the second frequency band.

In alternative embodiments, however, "soft" coupled systems are contemplated that may use two frequency bands independently so that signal transmission or reception using a first frequency band may overlap the signal transmission or reception by the same system using a second frequency band. For these embodiments, the first frequency band may be a lower frequency band such as those below 20 GHz (e.g., 2.4 GHz or 5.0 GHz bands) and the second frequency band may be a higher frequency band such as those above 20 GHz (e.g., in-band bands).

The soft coupled system may use the first lower frequency band for procedures that may not require a high data throughput rate such as network entry, bandwidth requests, bandwidth grants, scheduling the transmissions in a second higher frequency band, transferring feedback information that may comprise beam forming information and power control information, and so forth. In contrast, the second higher frequency band may be used for data transmission at relatively high data throughput rates.

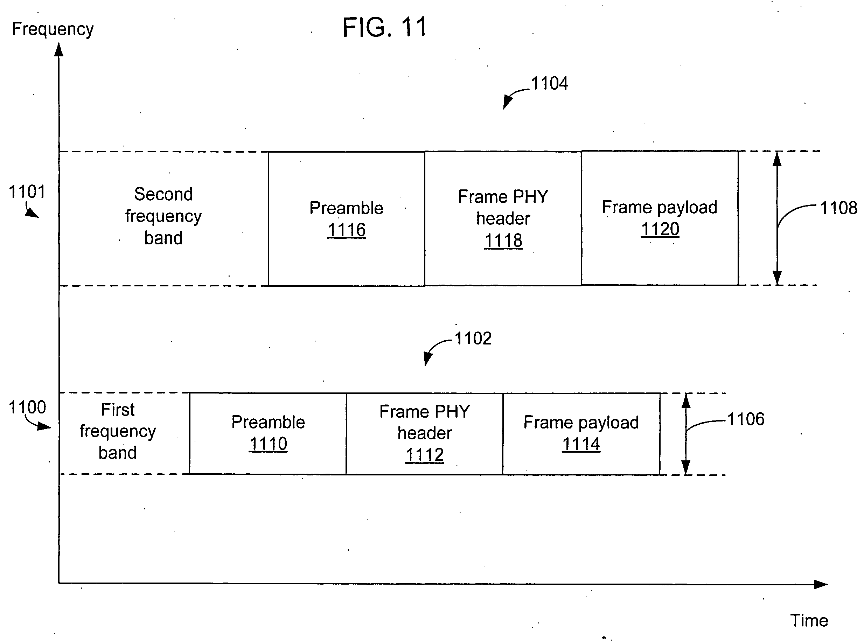

**FIG. 11** depicts frame formats for both a first and a second frequency band for a soft coupled system. The first frame format **1102** is associated with a first frequency band **1100** while the second frame format **1104** is associated with a second frequency band **1101.** The first frequency band **1100** may be a frequency band below 20 GHz while the second frequency band **1101** may be a frequency band above 20 GHz. The frame formats **1102** and **1104** may include respective preambles **1110** and **1116,** frame PHY headers **1112** and **1118,** and frame payloads **1114** and **1120.** Each of the preambles **1110** and **1116** may be adapted for frame detection, timing and frequency synchronization, and so forth, similar to that of the hard coupled system previously described. However, unlike the hard coupled system, the preambles **1110** and **1116** of these frame formats **1102** and **1104** may be processed independently with respect to each other. The preambles of both frame formats **1102** and **1104** may be embodied in signals adapted for coarse and fine estimations of CFO, timing synchronization, beam forming, and so forth.

Both of the frame formats **1102** and **1104** may include PHY headers **1112** and **1118** to indicate at least the amount of data carried in their associated frame payloads **1114** and **1120.** The PHY headers **1112** and **1118** may also indicate the modulation and/or coding type to be applied to the frame payloads **1114** and **1120,** beam forming control information, power control information of the payload, and/or other parameters. The frame PHY headers **1112** and **1118** may be modulated and coded using, for example, a predetermined modulation and coding type, a predetermined beam forming, and a predetermined power control that may be applied to the PHY headers **1112** and **1118.**

Both frame formats **1102** and **1104** may include a frame payload **1114** and 1120 to carry payload data. The frame payloads **1114** and **1120** of both frame formats **1102** and **1104** may include additional sub-headers to control the interpretation of the information within the payload, such as MAC layer headers that may indicate, for example, the source and/or destination addresses of the frame.

The frame payload **1114** of the first frame format **1102** may contain channel access control information such as bandwidth requests and grants. It may also contain special messages used for network entry, and test signals for measurement of distance between stations in the network, although these functionalities may be carried by the preamble **1110** in alternative embodiments. The first frame format **1102** may further include fields for sending feedback information from the destination of the packet back to its source, the feedback information relating to, for example, power control, rate control, beam forming control, for sending channel state information, receiver and/or transmitter performance indicators such as bit error ratio, current transmit power level, and so forth.

The frame payload **1120** of the second frame format **1104** may include information relating to higher network protocol layers.

The PHY headers **1112** and **1118** and/or the frame payloads **1114** and **1120** of both the first and the second frame formats **1102** and **1104** may include pilot signals for estimation and/or tracking of channel transfer functions, maintaining timing and/or frequency synchronization, and other service tasks.

Accessing of a wireless channel of a wireless network using the first frequency band **1100** may be based on contention between communication devices (e.g., stations) of the wireless network. Different techniques may be applied to resolve the collisions that may be possible due to contention. These techniques may include, for example, CSMA/CA, CSMA/CD, and so forth. Different division techniques may be used to reduce the number of collisions and include, for example, code division and frequency or time division of contention opportunities, and so forth. Accessing of the wireless channel using the first frequency band **1100** may include deterministic mechanisms provided that contention-based access takes place. Frame exchange sequences in the first frequency band **1100** may include special beacon frames transmitted periodically to facilitate the frame exchange in the first frequency band **1100**. The transmission of frames in the first frequency band **1100** other than beacons may occur in substantially random moments of time.

In contrast to the above approaches for accessing a wireless channel using the first frequency band **1100,** accessing of a wireless channel using the second frequency band **1101** may be deterministic and may be based on a schedule that may be derived as a result of communications using a lower frequency band (e.g., first frequency band **1100**). This may allow for more effective use of the high-throughput channel in the higher second frequency band **1101** as a result of reducing the time overhead for channel access by reducing the overhead of the backing-off and retransmissions caused by collisions taking place when using, for example, random channel access methods.

The first frequency band **1100** may be a lower frequency band while the second frequency band **1101** may be a higher frequency band. The first frequency band **1100** may be associated with a first bandwidth **1106** while the second frequency band **1101** may be associated with a second bandwidth **1108,** the second bandwidth **1108** being greater than the first bandwidth **1106.** Selected types of payloads may be communicated via the first frequency band **1100** while other types of payloads may be communicated using the second frequency band **1101.** For example, network control messages are typically short and comprised of few tens of bytes of data, while higher layer payload information may contain several thousand bytes or more. Therefore, network control messages may be communicated using the first frequency band **1100** while the second frequency band **1101** may be used in order to communicate the higher layer payload information.

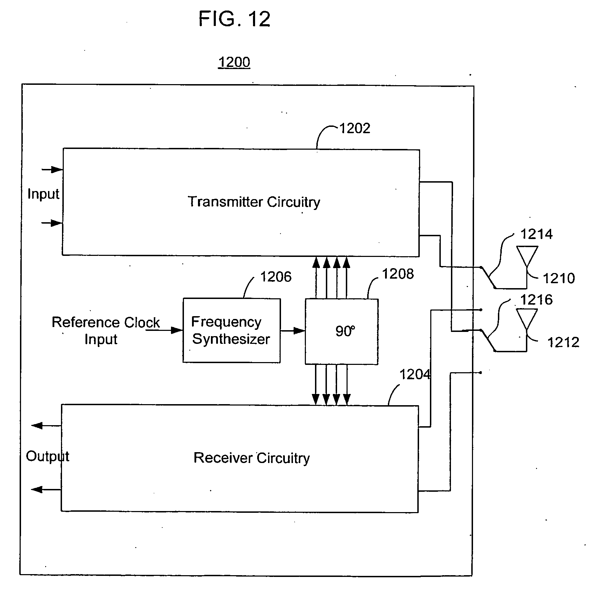

**FIG. 12** illustrates a transmitter/receiver circuitry of a soft coupled system for independent dual-band communication. The circuitry **1200** may be comprised of a transmitter circuitry **1202** and a receiver circuitry **1204.** The circuitry **1200** may be coupled to a MAC layer that may control various functionalities and may include, among other things, a frequency synthesizer 1206, a 90 degree phase splitter 1208, antennae 1210 and 1212, and switches 1214 and 1216. The frequency synthesizer 1206 may be a 2.4/5.0/60 GHz frequency synthesizer. As depicted, the transmitter and receiver circuitry 1202 and 1204 are coupled to the two antennae 1210 and 1212 via switches 1214 and 1216. In alternative embodiments, however, the transmitter and receiver circuitry 1202 and 1204 may be coupled to any number of antennas. In some embodiments, the first antenna 1210 and the second antenna 1212 may be adapted to transmit and/or receive a first and a second frequency band, respectively, wherein the first frequency band being a lower frequency band (e.g., UNII/ISM frequency bands) than the second frequency band (e.g., in-band bands). In various embodiments, switches 1214 and 1216 may be coupled to and controlled by the MAC layer to selectively communicate using, for example, an UNII/ISM frequency band and/or an in-band band.

Although certain embodiments have been illustrated and described herein for purposes of description of the preferred embodiment, it will be appreciated by those of ordinary skill in the art that a wide variety of alternate and/or equivalent embodiments or implementations calculated to achieve the same purposes may be substituted for the embodiments shown and described without departing from the scope of the present invention. Those with skill in the art will readily appreciate that embodiments in accordance with the present invention may be implemented in a very wide variety of ways. This application is intended to cover any adaptations or variations of the embodiments discussed herein. Therefore, it is manifestly intended that embodiments in accordance with the present invention be limited only by the claims.

## Claims

1. A method (500) for data communication, comprising:
transmitting, by a device (304) of a wireless network (300), first signals (802) using a first frequency band, the first frequency band being associated with a first beamwidth, the first signals to facilitate initial communication between the device and at least one other device (302, 306, 308) in the wireless network, including initial communication (512) of control information for coarse configuration of or by the at least one other device to facilitate wireless communication of second signals with the device using a second frequency band;
transmitting, by the device, the second signals (804) using the second frequency band associated with a second beamwidth, the second signals to facilitate further communication between the device and the at least one other device, including further communication (514) of control information for finer configuration of or by the at least one other device to facilitate wireless communication (516) of third signals carrying data with the device using the second frequency band, the first beamwidth being greater than the second beamwidth; and
transmitting, by the device, the third signals,
wherein said transmitting, by the device, of first signals using the first frequency band comprises transmitting by the device first signals to the at least one other device, using a 2.4 GHz Industrial, Scientific, Medical, ISM, band or a 5.0 GHz Universal Information Infrastructure, UNII, band, and
wherein said transmitting, by the device, of second signals using the second frequency band comprises transmitting by the device second signals to the at least one other device, using a frequency band centered at a frequency greater than 20 GHz.

2. The method of claim 1, wherein said transmitting, by a device, of first signals using a first frequency band comprises transmitting by the device first signals (802) to facilitate initial communication, including signals to facilitate initial beam forming by the at least one other device.

3. The method of claim 2, wherein said transmitting, by the device, of second signals to the at least one other device using the second frequency band comprises transmitting by the device second signals (804), including signals to facilitate a more precise beam forming by the at least one other device by supplementing the first signals used to initially beam form by the at least one other device.

4. The method of claim 1, wherein said transmitting, by the device, of first signals using a first frequency band comprises transmitting by the device first signals including signals (802) to facilitate initial estimation of carrier frequency offset, CFO, by the at least one other device.

5. The method of claim 4, wherein said transmitting, by the device, of second signals to the at least one other device using the second frequency band comprises transmitting by the device second signals (804) to the at least one other device, including signals to facilitate a more precise CFO estimation by the at least one other device.

6. The method of claim 1, wherein the second frequency band is a higher frequency band than the first frequency band.

7. The method of claim 6, wherein said transmitting, by the device, of second signals to the at least one other device using the second frequency band comprises transmitting by the device second signals (804) to the at least one other device, including signals to facilitate timing synchronization by the at least one other device.

8. The method of claim 1, wherein said transmitting, by the device, of second signals using the second frequency band comprises transmitting by the device second signals to the at least one other device using a second frequency band that is between 59 GHz and 62 GHz.

9. An apparatus (304; 600) for data communication, comprising:
a physical (PHY) layer component (612) adapted to transmit signals to at least one other device (302, 306, 308) of a wireless network (300) using a first and a second frequency band associated with a first and a second beamwidth, respectively, the first beamwidth being greater than the second beamwidth; and **characterized by**
a medium access control (MAC) layer component (610) coupled to the PHY layer component to selectively employ the PHY layer component to transmit first signals using the first frequency band to facilitate initial communication between the apparatus and selected one or more of the at least one other device including initial communication (512) of control information (802) for coarse configuration of or by the selected one or more of the at least one other device to facilitate wireless communication of second signals with each other using the second frequency band, to subsequently and selectively employ the PHY layer component to transmit the second signals using the second frequency band to facilitate further communication between the apparatus and the selected one or more of the at least one other device, including further communication of control information (804) for finer configuration of or by the selected one or more of the at least one other device to facilitate wireless communication of third signals (806) carrying data with each other using the second frequency band,
wherein said PHY layer component is adapted to transmit the first signals using a 2.4 GHz Industrial, Scientific, Medical, ISM, band or a 5.0 GHz Universal Information Infrastructure, UNII, band; and
wherein said PHY layer component is adapted to transmit the second signals using a frequency band centered at a frequency greater than 20 GHz.

10. The apparatus of claim 9, further comprising a first antenna (614) coupled to the PHY layer component to be employed by the PHY layer component to transmit at least the first signals (802).

11. The apparatus of claim 10, further comprising a second antenna (616) coupled to the PHY layer component to be employed by the PHY layer component to transmit at least the second signals (804).

12. The apparatus of claim 11, wherein the first and second antennae comprise first and second apertures, respectively, the first aperture being narrower than the second aperture.

13. The apparatus of any of claims 9-12, wherein said PHY layer component is adapted to transmit the first and/or the second signals in accordance with orthogonal frequency division multiplexing, OFDM.

14. An apparatus (304; 600) for data communication, comprising:
a physical,PHY, layer component (612) adapted to receive signals from at least one other device (302, 306, 308) of a wireless network (300) using a first and a second frequency band associated with a first and a second beamwidth, respectively, the first beamwidth being greater than the second beamwidth; and **characterized by**
a medium access control,MAC, layer component (610) coupled to the PHY layer component to selectively employ the PHY layer component to receive first signals using the first frequency band to facilitate initial communication between the apparatus and selected one or more of the at least one other device including initial communication (512) of control information (802) for coarse configuration of or by the selected one or more of the at least one other device to facilitate wireless communication of second signals with each other using the second frequency band, to subsequently and selectively employ the PHY layer component to receive the second signals using the second frequency band to facilitate further communication between the apparatus and the selected one or more of the at least one other device, including further communication of control information (804) for finer configuration of or by the selected one or more of the at least one other device to facilitate wireless communication of third signals (806) carrying data with each other using the second frequency band,
wherein said PHY layer component is adapted to receive the first signals using a 2.4 GHz Industrial, Scientific, Medical, ISM, band or a 5.0 GHz Universal Information Infrastructure, UNII, band; and
wherein said PHY layer component is adapted to receive the second signals using a frequency band centered at a frequency greater than 20 GHz.

15. The apparatus of claim 14, further comprising a first antenna (614) coupled to the PHY layer component to be employed by the PHY layer component to receive at least the first signals (802).

16. The apparatus of claim 15, further comprising a second antenna (616) coupled to the PHY layer component to be employed by the PHY layer component to receive at least the second signals (804).

17. The apparatus of claim 16, wherein the first and second antennae comprise first and second apertures, respectively, the first aperture being narrower than the second aperture.

18. The apparatus of any of claims 14-17, wherein said PHY layer component is adapted to receive the first and/or the second signals in accordance with orthogonal frequency division multiplexing (OFDM).

## Patentansprüche

1. Verfahren (500) zur Datenkommunikation, das Folgendes umfasst:
Senden durch eine Vorrichtung (304) eines drahtlosen Netzes (300) erster Signale (802) unter Verwendung eines ersten Frequenzbandes, wobei dem ersten Frequenzband eine erste Strahlbreite zugeordnet ist, wobei die ersten Signale dazu dienen, eine anfängliche Kommunikation zwischen der Vorrichtung und wenigstens einer anderen Vorrichtung (302, 306, 308) in dem drahtlosen Netz zu erleichtern, die die anfängliche Kommunikation (512) von Steuerinformationen für eine grobe Konfiguration der wenigstens einen oder durch die wenigstens eine andere Vorrichtung umfasst, um eine drahtlose Kommunikation zweiter Signale mit der Vorrichtung unter Verwendung eines zweiten Frequenzbandes zu erleichtern;
Senden durch die Vorrichtung der zweiten Signale (804) unter Verwendung des zweiten Frequenzbandes, dem eine zweite Strahlbreite zugeordnet ist, wobei die zweiten Signale dazu dienen, die weitere Kommunikation zwischen der Vorrichtung und der wenigstens einen anderen Vorrichtung zu erleichtern, die die weitere Kommunikation (514) von Steuerinformationen für eine feinere Konfiguration der wenigstens einen oder durch die wenigstens eine andere Vorrichtung, um eine drahtlose Kommunikation (516) dritter Signale, die Daten führen, mit der Vorrichtung unter Verwendung des zweiten Frequenzbandes zu erleichtern, wobei die erste Strahlbreite größer als die zweite Strahlbreite ist; und
Senden durch die Vorrichtung der dritten Signale,
wobei das Senden durch die Vorrichtung erster Signale unter Verwendung des ersten Frequenzbandes das Senden durch die Vorrichtung erster Signale zu der wenigstens einen anderen Vorrichtung unter Verwendung eines industriellen wissenschaftlichen medizinischen 2,4 GHz-Bandes, 2,4 GHz-ISM-Bandes, oder eines universellen 5,0 GHz-Informationsinfrastrukturbandes, 5,0 GHz-UNII-Bandes, umfasst, und
wobei das Senden durch die Vorrichtung zweiter Signale unter Verwendung des zweiten Frequenzbandes das Senden durch die Vorrichtung zweiter Signale zu der wenigstens einen anderen Vorrichtung unter Verwendung eines Frequenzbandes, das auf eine Frequenz größer als 20 GHz zentriert ist, umfasst.

2. Verfahren nach Anspruch 1, wobei das Senden durch die Vorrichtung erster Signale unter Verwendung eines ersten Frequenzbandes das Senden durch die Vorrichtung erster Signale (802), um die anfängliche Kommunikation zu erleichtern, die Signale enthalten, um die anfängliche Strahlformung durch die wenigstens eine andere Vorrichtung zu erleichtern, umfasst.

3. Verfahren nach Anspruch 2, wobei das Senden durch die Vorrichtung zweiter Signale zu der wenigstens einen anderen Vorrichtung unter Verwendung des zweiten Frequenzbandes das Senden durch die Vorrichtung zweiter Signale (804), die Signale enthalten, um eine präzisere Strahlformung durch die wenigstens eine andere Vorrichtung durch Ergänzen der ersten Signale, die verwendet werden, um einen Strahl durch die wenigstens eine andere Vorrichtung anfänglich zu formen, zu erleichtern.

4. Verfahren nach Anspruch 1, wobei das Senden durch die Vorrichtung erster Signale unter Verwendung eines ersten Frequenzbandes das Senden durch die Vorrichtung erster Signale, die Signale (802) enthalten, um eine anfängliche Schätzung eines Trägerfrequenzversatzes, CFO, durch die wenigstens eine andere Vorrichtung zu erleichtern, umfasst.

5. Verfahren nach Anspruch 4, wobei das Senden durch die Vorrichtung zweiter Signale zu der wenigstens einen anderen Vorrichtung unter Verwendung des zweiten Frequenzbandes das Senden durch die Vorrichtung zweiter Signale (804) zu der wenigstens einen anderen Vorrichtung, die Signale enthalten, um eine präzisere CFO-Schätzung durch die wenigstens eine andere Vorrichtung zu erleichtern, umfasst.

6. Verfahren nach Anspruch 1, wobei das zweite Frequenzband ein höheres Frequenzband als das erste Frequenzband ist.

7. Verfahren nach Anspruch 6, wobei das Senden durch die Vorrichtung zweiter Signale zu der wenigstens einen anderen Vorrichtung unter Verwendung des zweiten Frequenzbandes das Senden durch die Vorrichtung zweiter Signale (804) zu der wenigstens einen anderen Vorrichtung, die Signale enthalten, um die zeitliche Synchronisation durch die wenigstens eine andere Vorrichtung zu erleichtern, umfasst.

8. Verfahren nach Anspruch 1, wobei das Senden durch die Vorrichtung zweiter Signale unter Verwendung des zweiten Frequenzbandes das Senden durch die Vorrichtung zweiter Signale zu der wenigstens einen anderen Vorrichtung unter Verwendung eines zweiten Frequenzbandes, das im Bereich von 59 GHz bis 62 GHz liegt, umfasst.

9. Vorrichtung (304; 600) zur Datenkommunikation, die Folgendes umfasst:
eine Komponente (612) einer physikalischen Schicht (PHY-Schicht), die dafür ausgelegt ist, Signale zu wenigstens einer anderen Vorrichtung (302, 306, 308) eines drahtlosen Netzes (300) unter Verwendung eines ersten und eines zweiten Frequenzbandes, denen eine erste bzw. eine zweite Strahlbreite zugeordnet ist, zu senden, wobei die erste Strahlbreite größer als die zweite Strahlbreite ist; und **gekennzeichnet durch**
eine Komponente (610) einer Mediumzugriffsteuerschicht (MAC-Schicht), die mit der PHY-Schichtkomponente gekoppelt ist, um wahlweise die PHY-Schichtkomponente zu verwenden, um erste Signale unter Verwendung des ersten Frequenzbandes zu senden, um eine anfängliche Kommunikation zwischen der Vorrichtung und einer oder mehreren ausgewählten der wenigstens einen anderen Vorrichtung, die die anfängliche Kommunikation (512) von Steuerinformationen (802) für eine grobe Konfiguration der einen oder der mehreren oder **durch** die eine oder die mehreren der wenigstens einen anderen Vorrichtung zu erleichtern, um eine drahtlose Kommunikation zweiter Signale miteinander unter Verwendung des zweiten Frequenzbandes zu erleichtern, um anschließend und wahlweise die PHY-Schichtkomponente zu verwenden, um die zweiten Signale unter Verwendung des zweiten Frequenzbandes zu senden, um die weitere Kommunikation zwischen der Vorrichtung und der einen oder den mehreren ausgewählten der wenigstens einen anderen Vorrichtung zu erleichtern, die die weitere Kommunikation von Steuerinformationen (804) für eine feinere Konfiguration der einen oder der mehreren oder **durch** die eine oder die mehreren ausgewählten der wenigstens einen anderen Vorrichtung umfasst, um die drahtlose Kommunikation dritter Signale (806), die Daten führen, miteinander unter Verwendung des zweiten Frequenzbandes zu erleichtern,
wobei die PHY-Schichtkomponente dafür ausgelegt ist, die ersten Signale unter Verwendung eines industriellen wissenschaftlichen medizinischen 2,4 GHz-Bandes, 2,4 GHz-ISM-Bandes, oder eines universellen 5,0 GHz-Informationsinfrastrukturbandes, 5,0 GHz-UNII-Bandes, zu senden; und
wobei die PHY-Schichtkomponente dafür ausgelegt ist, die zweiten Signale unter Verwendung eines Frequenzbandes, das auf eine Frequenz größer als 20 GHz zentriert ist, zu senden.

10. Vorrichtung nach Anspruch 9, die ferner eine erste Antenne (614) umfasst, die mit der PHY-Schichtkomponente gekoppelt ist und durch die PHY-Schichtkomponente zu verwenden ist, um wenigstens die ersten Signale (802) zu senden.

11. Vorrichtung nach Anspruch 10, die ferner eine zweite Antenne (616) umfasst, die mit der PHY-Schichtkomponente gekoppelt ist und durch die PHY-Schichtkomponente zu verwenden ist, um wenigstens die zweiten Signale (804) zu senden.

12. Vorrichtung nach Anspruch 11, wobei die erste und die zweite Antenne eine erste bzw. eine zweite Apertur haben, wobei die erste Apertur schmäler als die zweite Apertur ist.

13. Vorrichtung nach einem der Ansprüche 9-12, wobei die PHY-Schichtkomponente dafür ausgelegt ist, die ersten und/oder zweiten Signale in Übereinstimmung mit einem orthogonalen Frequenzmultiplexing, OFDM, zu senden.

14. Vorrichtung (304; 600) zur Datenkommunikation, die Folgendes umfasst:
eine Komponente (612) einer physikalischen Schicht, PHY-Schicht, die dafür ausgelegt ist, Signale von wenigstens einer anderen Vorrichtung (302, 306, 308) eines drahtlosen Netzes (300) unter Verwendung eines ersten und eines zweiten Frequenzbandes, denen eine erste bzw. eine zweite Strahlbreite zugeordnet ist, zu empfangen, wobei die erste Strahlbreite größer als die zweite Strahlbreite ist; und **gekennzeichnet durch**
eine Komponente (610) einer Mediumzugriffsteuerschicht, MAC-Schicht, die mit der PHY-Schichtkomponente gekoppelt ist, um die PHY-Schichtkomponente wahlweise zu verwenden, um erste Signale unter Verwendung des ersten Frequenzbandes zu empfangen, um eine anfängliche Kommunikation zwischen der Vorrichtung und einer oder mehreren ausgewählten der wenigstens einen anderen Vorrichtung zu erleichtern, die die anfängliche Kommunikation (512) von Steuerinformationen (802) für eine grobe Konfiguration der einen oder der mehreren oder **durch** die eine oder die mehreren ausgewählten der wenigstens einen anderen Vorrichtung umfasst, um die drahtlose Kommunikation zweiter Signale miteinander unter Verwendung des zweiten Frequenzbandes zu erleichtern, um anschließend und wahlweise die PHY-Schichtkomponente zu verwenden, um die zweiten Signale unter Verwendung des zweiten Frequenzbandes zu empfangen, um die weitere Kommunikation zwischen der Vorrichtung und der einen oder den mehreren der ausgewählten der wenigstens einen anderen Vorrichtung zu erleichtern, die die weitere Kommunikation von Steuerinformationen (804) für eine feinere Konfiguration der einen oder der mehreren oder durch die eine oder die mehreren ausgewählten der wenigstens einen anderen Vorrichtung umfasst, um die drahtlose Kommunikation dritter Signale (806), die Daten führen, miteinander unter Verwendung des zweiten Frequenzbandes zu erleichtern,
wobei die PHY-Schichtkomponente dafür ausgelegt ist, die ersten Signale unter Verwendung eines industriellen wissenschaftlichen medizinischen 2,4 GHz-Bandes, 2,4 GHz-ISM-Bandes, oder eines universellen 5,0 GHz-Informationsinfrastrukturbandes, 5,0 GHz-UNII-Bandes, zu senden; und
wobei die PHY-Schichtkomponente dafür ausgelegt ist, die zweiten Signale unter Verwendung eines Frequenzbandes, das auf eine Frequenz größer als 20 GHz zentriert ist, zu senden.

15. Vorrichtung nach Anspruch 14, die ferner eine erste Antenne (614) umfasst, die mit der PHY-Schichtkomponente gekoppelt ist und durch die PHY-Schichtkomponente zu verwenden ist, um wenigstens die ersten Signale (802) zu empfangen.

16. Vorrichtung nach Anspruch 15, die ferner eine zweite Antenne (616) umfasst, die mit der PHY-Schichtkomponente gekoppelt ist und durch die PHY-Schichtkomponente zu verwenden ist, um wenigstens die zweiten Signale (804) zu empfangen.

17. Vorrichtung nach Anspruch 16, wobei die erste und die zweite Antenne eine erste bzw. eine zweite Apertur aufweisen, wobei die erste Apertur schmäler als die zweite Apertur ist.

18. Vorrichtung nach einem der Ansprüche 14-17, wobei die PHY-Schichtkomponente dafür ausgelegt ist, die ersten und/oder die zweiten Signale in Übereinstimmung mit einem orthogonalen Frequenzmultiplexing (OFDM) zu empfangen.

## Revendications

1. Procédé (500) pour une communication de données, comprenant les étapes suivantes :
transmettre, par un dispositif (304) d'un réseau sans fil (300), des premiers signaux (802) en utilisant une première bande de fréquences, la première bande de fréquences étant associée à une première largeur de faisceau, les premiers signaux devant faciliter une communication initiale entre le dispositif et au moins un autre dispositif (302, 306, 308) dans le réseau sans fil, comportant une communication initiale (512) d'informations de commande pour une configuration grossière dudit ou par ledit autre dispositif pour faciliter une communication sans fil de deuxièmes signaux avec le dispositif en utilisant une deuxième bande de fréquences ;
transmettre, par le dispositif, les deuxièmes signaux (804) en utilisant la deuxième bande de fréquences associée à une deuxième largeur de faisceau, les deuxièmes signaux devant faciliter une autre communication entre le dispositif et ledit autre dispositif, comportant une autre communication (514) d'informations de commande pour une configuration plus fine dudit ou par ledit autre dispositif pour faciliter une communication sans fil (516) de troisièmes signaux transportant des données avec le dispositif en utilisant la deuxième bande de fréquences, la première largeur de faisceau étant supérieure à la deuxième largeur de faisceau ; et
transmettre, par le dispositif, les troisièmes signaux,
ladite étape consistant à transmettre, par le dispositif, des premiers signaux en utilisant la première bande de fréquences comprenant : transmettre par le dispositif des premiers signaux au dit autre dispositif, en utilisant une bande ISM (Industrielle, Scientifique et Médicale) de 2,4 GHz ou une bande UNII (Infrastructure d'informations universelle) de 5,0 GHz, et
ladite étape consistant à transmettre, par le dispositif, des deuxièmes signaux en utilisant la deuxième bande de fréquences comprenant : transmettre par le dispositif des deuxièmes signaux au dit autre dispositif, en utilisant une bande de fréquences centrée à une fréquence supérieure à 20 GHz.

2. Procédé selon la revendication 1, dans lequel ladite étape consistant à transmettre, par un dispositif, des premiers signaux en utilisant une première bande de fréquences comprend : transmettre par le dispositif des premiers signaux (802) pour faciliter une communication initiale, comportant des signaux permettant de faciliter une formation de faisceau initiale par ledit autre dispositif.

3. Procédé selon la revendication 2, dans lequel ladite étape consistant à transmettre, par le dispositif, des deuxièmes signaux au dit autre dispositif en utilisant la deuxième bande de fréquences comprend : transmettre par le dispositif des deuxièmes signaux (804), comportant des signaux permettant de faciliter une formation de faisceau plus précise par ledit autre dispositif en complétant les premiers signaux utilisés pour une formation de faisceau initiale par ledit autre dispositif.

4. Procédé selon la revendication 1, dans lequel ladite étape consistant à transmettre, par le dispositif, des premiers signaux en utilisant une première bande de fréquences comprend : transmettre par le dispositif des premiers signaux comportant des signaux (802) permettant de faciliter une estimation initiale de décalage de fréquence porteuse, CFO, par ledit autre dispositif.

5. Procédé selon la revendication 4, dans lequel ladite étape consistant à transmettre, par le dispositif, des deuxièmes signaux au dit autre dispositif en utilisant la deuxième bande de fréquences comprend : transmettre par le dispositif des deuxièmes signaux (804) au dit autre dispositif, comportant des signaux permettant de faciliter une estimation CFO plus précise par ledit autre dispositif.

6. Procédé selon la revendication 1, dans lequel la deuxième bande de fréquences est une bande de fréquences supérieure à la première bande de fréquences.

7. Procédé selon la revendication 6, dans lequel ladite étape consistant à transmettre, par le dispositif, des deuxièmes signaux au dit autre dispositif en utilisant la deuxième bande de fréquences comprend : transmettre par le dispositif des deuxièmes signaux (804) au dit autre dispositif, comportant des signaux permettant de faciliter une synchronisation temporelle par ledit autre dispositif.

8. Procédé selon la revendication 1, dans lequel ladite étape consistant à transmettre, par le dispositif, des deuxièmes signaux en utilisant la deuxième bande de fréquences comprend : transmettre par le dispositif des deuxièmes signaux au dit autre dispositif en utilisant une deuxième bande de fréquences qui est comprise entre 59 GHz et 62 GHz.

9. Appareil (304 ; 600) pour une communication de données, comprenant :
un composant de couche physique (PHY) (612) conçu pour transmettre des signaux au dit autre dispositif (302, 306, 308) d'un réseau sans fil (300) en utilisant une première et une deuxième bande de fréquences associées à une première et à une deuxième largeur de faisceau, respectivement, la première largeur de faisceau étant supérieure à la deuxième largeur de faisceau ; et **caractérisé par**
un composant de couche de contrôle d'accès au support (MAC) (610) couplé au composant de couche PHY pour employer sélectivement le composant de couche PHY pour transmettre des premiers signaux en utilisant la première bande de fréquences afin de faciliter une communication initiale entre l'appareil et un ou plusieurs dispositifs sélectionnés dudit autre dispositif comportant une communication initiale (512) d'informations de commande (802) pour une configuration grossière des ou par les un ou plusieurs dispositifs sélectionnés dudit autre dispositif pour faciliter une communication sans fil de deuxièmes signaux en utilisant la deuxième bande de fréquences, pour employer subséquemment et sélectivement le composant de couche PHY pour transmettre les deuxièmes signaux en utilisant la deuxième bande de fréquences afin de faciliter une autre communication entre l'appareil et les un ou plusieurs dispositifs sélectionnés dudit autre dispositif, comportant une autre communication d'informations de commande (804) pour une configuration plus fine des ou par les un ou plusieurs dispositifs sélectionnés dudit autre dispositif pour faciliter une communication sans fil de troisièmes signaux (806) transportant des données en utilisant la deuxième bande de fréquences,
ledit composant de couche PHY étant conçu pour transmettre les premiers signaux en utilisant une bande ISM (Industrielle, Scientifique et Médicale) de 2,4 GHz ou une bande UNII (Infrastructure d'informations universelle) de 5,0 GHz ; et
ledit composant de couche PHY étant conçu pour transmettre les deuxièmes signaux en utilisant une bande de fréquences centrée à une fréquence supérieure à 20 GHz.

10. Appareil selon la revendication 9, comprenant en outre une première antenne (614) couplée au composant de couche PHY destinée à être employée par le composant de couche PHY pour transmettre au moins les premiers signaux (802).

11. Appareil selon la revendication 10, comprenant en outre une deuxième antenne (616) couplée au composant de couche PHY destinée à être employée par le composant de couche PHY pour transmettre au moins les deuxièmes signaux (804).

12. Appareil selon la revendication 11, dans lequel les première et deuxième antennes comprennent des première et deuxième ouvertures, respectivement, la première ouverture étant plus étroite que la deuxième ouverture.

13. Appareil selon l'une quelconque des revendications 9-12, dans lequel ledit composant de couche PHY est conçu pour transmettre les premiers et/ou les deuxièmes signaux selon un multiplexage par répartition orthogonale de la fréquence, OFDM.

14. Appareil (304 ; 600) pour une communication de données, comprenant :
un composant de couche physique (PHY) (612) conçu pour recevoir des signaux à partir d'au moins un autre dispositif (302, 306, 308) d'un réseau sans fil (300) en utilisant une première et une deuxième bande de fréquences associées à une première et à une deuxième largeur de faisceau, respectivement, la première largeur de faisceau étant supérieure à la deuxième largeur de faisceau ; et **caractérisé par**
un composant de couche de contrôle d'accès au support (MAC) (610) couplé au composant de couche PHY pour employer sélectivement le composant de couche PHY pour recevoir des premiers signaux en utilisant la première bande de fréquences afin de faciliter une communication initiale entre l'appareil et un ou plusieurs dispositifs sélectionnés dudit autre dispositif comportant une communication initiale (512) d'informations de commande (802) pour une configuration grossière des ou par les un ou plusieurs dispositifs sélectionnés dudit autre dispositif pour faciliter une communication sans fil de deuxièmes signaux en utilisant la deuxième bande de fréquences, pour employer subséquemment et sélectivement le composant de couche PHY pour recevoir les deuxièmes signaux en utilisant la deuxième bande de fréquences pour faciliter une autre communication entre l'appareil et les un ou plusieurs dispositifs sélectionnés dudit autre dispositif, comportant une autre communication d'informations de commande (804) pour une configuration plus fine des ou par les un ou plusieurs dispositifs sélectionnés dudit autre dispositif pour faciliter une communication sans fil de troisièmes signaux (806) transportant des données en utilisant la deuxième bande de fréquences,
ledit composant de couche PHY étant conçu pour recevoir les premiers signaux en utilisant une bande ISM (Industrielle, Scientifique et Médicale) de 2,4 GHz ou une bande UNII (Infrastructure d'informations universelle) de 5.0 GHz ; et
ledit composant de couche PHY étant conçu pour recevoir les deuxièmes signaux en utilisant une bande de fréquences centrée à une fréquence supérieure à 20 GHz.

15. Appareil selon la revendication 14, comprenant en outre une première antenne (614) couplée au composant de couche PHY destinée à être employée par le composant de couche PHY pour recevoir au moins les premiers signaux (802).

16. Appareil selon la revendication 15, comprenant en outre une deuxième antenne (616) couplée au composant de couche PHY destinée à être employée par le composant de couche PHY pour recevoir au moins les deuxièmes signaux (804).

17. Appareil selon la revendication 16, dans lequel les première et deuxième antennes comprennent des première et deuxième ouvertures, respectivement, la première ouverture étant plus étroite que la deuxième ouverture.

18. Appareil selon l'une quelconque des revendications 14-17, dans lequel ledit composant de couche PHY est conçu pour recevoir les premiers et/ou les deuxièmes signaux selon un multiplexage par répartition orthogonale de la fréquence (OFDM).
